# FASCICULE DE BREVET EUROPEEN

(11) **EP 2 591 588 B1**
(45) Date de publication et mention de la délivrance du brevet: **24.02.2021**
(21) Numéro de dépôt: 11743088.4
(22) Date de dépôt: 05.07.2011
(51) Int. Cl.: H04L 29/08

(54) **ACCÈS À UN RÉSEAU DE NOEUDS RÉPARTIS SUR UNE ARCHITECTURE DE COMMUNICATION A L'AIDE D'UN SERVEUR DE TOPOLOGIE AVEC SÉLECTION MULTICRITÈRES**
ZUGANG ZU EINEM ÜBER EINE KOMMUNIKATIONSARCHITEKTUR VERTEILTEN KNOTENNETZWERK MITHILFE EINES TOPOLOGIESERVERS MIT MEHRKRITERIENAUSWAHL
ACCESS TO A NETWORK OF NODES DISTRIBUTED OVER A COMMUNICATION ARCHITECTURE, USING A TOPOLOGY SERVER WITH MULTI-CRITERIA SELECTION

(30) Priorité: 08.07.2010 FR 1055568
(43) Date de publication de la demande: 15.05.2013
(73) Titulaire: Alcatel Lucent, 91620 Nozay (FR)
(72) Inventeur: RANDRIAMASY, Claire, Sabine, F-91620 Nozay (FR)
(74) Mandataire: Cabinet Camus Lebkiri
(86) Numéro de dépôt international: PCT/FR2011/051582
(87) Numéro de publication internationale: WO 2012/004513

(56) Documents cités:
- US-A1- 2002 135 610
- US-A1- 2006 245 431
- ALIMI R ET AL: "ALTO Protocol; draft-ietf-alto-protocol-04.txt", ALTO PROTOCOL; DRAFT-IETF-ALTO-PROTOCOL-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 1 juin 2010 (2010-06-01), pages 1-57, XP015068741, cité dans la demande

## Description

La présente invention est relative aux applications réparties sur un réseau de nœuds déployés sur une architecture de communication.

Ces applications comprennent les applications dites « pair-à-pair » (ou p2p selon la terminologie en langue anglaise « peer-to-peer ») mais également les réseaux de type CDN (« Content Delivery Network ») qui sont constitués d'ordinateurs reliés en réseau à travers Internet, et qui coopèrent afin de mettre à disposition du contenu ou des données (généralement du contenu multimédia volumineux) à des utilisateurs.

Ce type de réseau est constitué :
- de serveurs d'origine, où les contenus sont "injectés" dans le CDN pour y être répliqués ;
- de nœuds de stockage (permanent ou non) répartis géographiquement en "bordure" d'Internet, où les contenus sont répliqués ;
- d'un mécanisme de routage sémantique (« name-based routing ») permettant à une requête utilisateur sur un contenu d'être servie par le nœud le "plus proche", au sens sémantique

Ces applications réparties comprennent également les « grilles informatiques », plus communément appelées GRID qui sont des infrastructures virtuelles constituées d'un ensemble de ressources informatiques potentiellement partagées, distribuées, hétérogènes, délocalisées et autonomes.

D'autres types d'applications peuvent également être inclues dans le cadre de l'invention.

Ces applications réparties partagent la même caractéristique de mettre en relation des nœuds applicatifs (« overlay ») sous forme de réseau, en se basant sur leur contenu ou leurs caractéristiques sémantiques, mais sans se préoccuper de la caractéristique topologique de l'architecture de communication sous-jacente.

Cette indépendance entre la structure logique et l'architecture matérielle présente des avantages mais également au moins un inconvénient majeur puisque le déploiement du réseau de nœuds applicatifs ne prend pas en compte la topologie de cette architecture de communication.

Deux noeuds peuvent en effet être voisins dans le réseau de noeuds selon des critères uniquement applicatif et sémantiques, mais être déployés sur des équipements de communication distants. La situation où un nœud est localisé dans un continent et son voisin dans un autre n'est pas rare.

Il en résulte une augmentation des délais de transmission de bout en bout et une dégradation des performances générales du réseau de noeuds, mais également par l'utilisation de nombreuses connexions distantes, un engorgement du réseau internet dans son ensemble.

Un autre problème est que cela nécessite que des opérateurs laissent transiter dans leurs réseaux du trafic non facturé. Cela oblige certains opérateurs à sur-dimensionner leur réseau ou à dégrader la qualité de service affectée à ce trafic.

Des propositions ont été faites pour améliorer la situation. Une de ces propositions est le service « ALTO » (Application-Layer Traffic Optimization) qui fait l'objet d'un groupe de travail au sein de l'IETF (Internet Engineering Task Force).

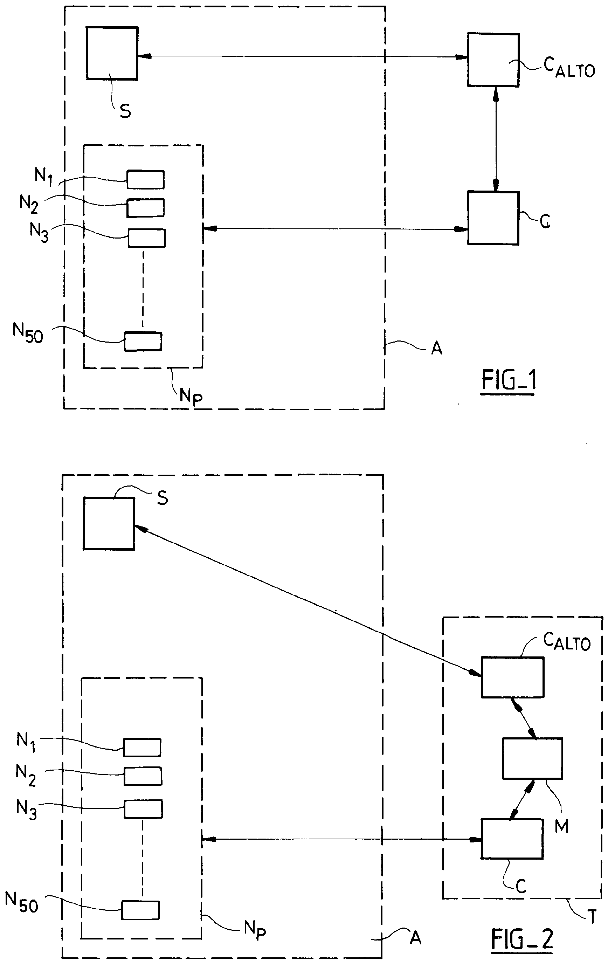

Le principe de cette proposition est illustré par la figure 1 et repose sur un serveur S qui dispose d'une vue partielle de l'architecture de communication A. Ce serveur ALTO S permet aux clients ALTO C_{ALTO} d'obtenir des informations sur un ensemble de nœuds N1, N2, N3... N50 du réseau de nœuds Nₚ prenant en compte cette vue partielle. Cette vue est partielle au sens où elle ne couvre qu'une région de l'architecture de communication et elle est centrée sur l'opérateur d'un système autonome donné dont elle représente la vue du réseau Internet.

Ainsi qu'expliqué au paragraphe 2.2 du document draft-ietf-alto-protocol-04.txt, une région peut être un système autonome, un réseau géré par un fournisseur d'accès à l'internet (ISP pour Internet Service Provider), ou bien un sous-réseau ou un ensemble de tels réseaux.

Le serveur ALTO S peut proposer aux clients ALTO différents services. Il peut notamment fournir une cartographie de sa vue du réseau ou bien fournir un ordonnancement d'un ensemble de nœuds dont les identifiants lui sont transmis par le client ALTO auquel est connecté le client applicatif C.

Ces informations fournies par le serveur S prennent en compte la topologie du réseau et peuvent donc permettre aux clients C de mettre en place un réseau de nœuds (notamment un réseau pair-à-pair) tirant profit de cette connaissance. Ainsi, des réseaux optimaux pour le mécanisme de transmission/livraison peuvent être mis en place.

Toutefois, ce mécanisme ne permet que de déterminer des informations relatives à une unique caractéristique à la fois, ainsi qu'actuellement spécifié par le document draft-ietf-alto-protocol-04.txt. Cette caractéristique peut être, selon le paragraphe 5.1.1, une distance géographique, un nombre de sauts (« *hops* ») ou un coût de routage générique.

Dans sa requête adressée au serveur ALTO, le client doit préciser une caractéristique (appelée « Cost Type ») et le serveur répond par des informations concernant cette caractéristique.

Il peut toutefois être intéressant de ne pas se baser sur une seule caractéristique, mais de permettre un choix d'un ensemble de nœuds applicatifs à partir d'une pluralité de caractéristiques. Il peut en outre être intéressant de prendre en compte une plus grande diversité de caractéristiques et d'ainsi permettre un très grand nombre de combinaisons et critères de choix.

Cela n'est actuellement possible qu'en adressant autant de requêtes au serveur ALTO que l'on souhaite prendre en compte de caractéristiques. Le client peut alors rassembler les informations reçus pour construire sa solution.

Néanmoins, une telle façon de faire n'est pas optimale. En effet, elle génère un important échange de messages entre les client et serveur ALTO. Ce trafic n'est pas facturable pour l'opérateur et peut contribuer à engorger les ressources de l'architecture de communication.

Par ailleurs le RFC 5693 de l'IETF formalisant le problème ALTO stipule dans son paragraphe 5.1 "Information Provided by an ALTO Service", que les informations fournies par le service ALTO sont caractérisées par des changements peu fréquents, car les informations changeant fréquemment d'une part nécessiteraient des mises à jour fréquentes et coûteuses ou alors seraient souvent obsolètes. C'est le cas des métriques reflétant l'état instantané du réseau, comme par exemple le délai de bout en bout ou la bande passante disponible. Cependant, nombreuses sont les applications actuellement en essor dont le bon fonctionnement s'appuie sur une connaissance des valeurs statistiques de ces métriques. De plus en plus d'opérateurs de services et de réseaux et aussi des nœuds applicatifs, calculent et stockent ces statistiques afin de mieux gérer le trafic. Il est donc dommage de ne pas intégrer dans les services fournis par ALTO ces statistiques dans la mesure où souvent elles existent déjà et couvrent des plages temporelles compatibles avec la fréquence des mises à jour des serveurs ALTO.

Il existe donc un besoin réel d'améliorer la situation.

Le document US 2006/0245431 intitulé "Processing opérations associated with resources on a local network" et le document US 2002/0135610 intitulé "Vizualization of multi-layer network topology" sont connus de l'état de la technique.

Pour ce faire, l'invention propose un système d'accès à une application répartie sur un réseau de nœuds déployé sur une architecture de communication, par un client applicatif connecté à cette architecture de communication. Le système d'accès comporte un serveur disposant d'une vue topologique du réseau au sein de l'architecture de communication et des moyens pour fournir sur requête du client applicatif des informations sur un ensemble de nœuds de ce réseau en fonction de la vue topologique.

Le serveur est apte à fournir des informations concernant une pluralité de caractéristiques relatives à cet ensemble de nœuds.

Selon un mode de réalisation de l'invention, le système d'accès comporte en outre un dispositif de médiation adapté pour déterminer un ordonnancement de nœuds de l'ensemble de nœuds en fonction de ces informations.

Le dispositif de médiation peut être adapté pour déterminer l'ordonnancement en fonction de poids associés auxdites caractéristiques.

Ces poids peuvent être fournis par ledit client applicatif.

L'invention a également pour objet une application logicielle comportant les moyens adaptés au déroulement de ce procédé lorsqu'elle est mise en œuvre sur un dispositif de traitement de données.

L'invention, ses avantages et ses caractéristiques apparaîtront de façon plus claire dans la description de mises en œuvre qui va suivre en liaison avec les figures annexées.
La figure 1, déjà commentée, illustre une architecture de communication mettant en œuvre le protocole ALTO.
La figure 2 schématise une architecture de communication mettant en œuvre un système d'accès selon l'invention.

La vue représentée par la figure 2 est une vue fonctionnelle schématique. Elle a été volontairement simplifiée afin de rendre plus clair l'exposé des principes de l'invention.

Elle représente une architecture de communication A à laquelle est connectée un client C. Ce client C est un client applicatif qui souhaite utiliser une application répartie sur des nœuds N1, N2, N3... N50 d'un réseau de nœuds Np.

Comme évoqué précédemment, ces nœuds peuvent présenter des caractéristiques différentes vis-à-vis de la topologie du réseau. Ainsi, ils peuvent être localisés sur des équipements reliés à l'architecture de communication A par des moyens d'accès différents (Ethernet™, Wifi, 3G, LTE...) ayant chacun des propriétés différentes en terme de bande passante, disponibilité, etc. mais ils peuvent aussi être situés dans des réseaux d'opérateurs différents et dans des zones géographiques très différentes.

Le client applicatif C peut être localisé sur un terminal de télécommunication T. Ce peut être un téléphone mobile, un ordinateur portable, un assistant personnel numérique ou tout autre dispositif permettant à un utilisateur de se connecter à des applications situées sur une architecture de communication telle Internet. Les applications peuvent être des applications de jeu en réseau, de partage de fichiers, d'accès à des flux multimédia, notamment vidéo, de calcul partagé, etc.

De façon connue en soi, le client applicatif C peut connaître une liste de noeuds du réseau Np. Différentes techniques existent pour ce faire, comme par exemple l'utilisation d'un serveur centralisé proposant un point d'accès à ce réseau. Ce serveur centralisé est par exemple un « tracker » dans le cadre d'un réseau Np de type «pair à pair ». Dans un mode complètement distribué, les nœuds pairs peuvent être identifiés par des techniques d'échanges de pairs (« Peer Exchange », PEX) ou encore par un moteur de recherche.

Le client applicatif C peut alors transmettre, sous une forme de requête ou demande de service, cette liste au client ALTO C_{ALTO}. Ce client ALTO peut être colocalisé dans le même terminal de communication T ainsi que la figure 2 le représente. Il s'agit alors de deux modules fonctionnelles qui peuvent être bien distincts (deux produits logiciels différents inter opérant par des interfaces) ou de moyens techniques assemblés dans un même module logiciel.

Il peut aussi être localisé au sein de l'architecture de communication A, par exemple au sein du serveur centralisé identifiant les nœuds Np (tracker...) évoqué précédemment.

Le client ALTO est une entité fonctionnelle adaptée pour assurer l'interface entre un client applicatif C et un serveur ALTO. Il met notamment en œuvre les moyens logiciels permettant une communication avec ce serveur selon le protocole ALTO en cours de spécification par l'IETF. Il peut en outre comporter les moyens pour déterminer le ou les serveurs ALTO disponibles au sein de l'architecture de communication A à laquelle il est connecté ainsi que les services qu'ils assurent.

Le client ALTO C_{ALTO} transmet alors une demande de service ou requête à un serveur ALTO S. Cette demande de service comprend la liste des nœuds déterminés par le client applicatif C, ainsi qu'un identifiant d'un service. Ce service peut comprendre les services définis au paragraphe 3.2 du document draft-ietf-alto-protocol-04.txt précédemment évoqué, mais il peut bien évidemment en comprendre d'autres, normalisés ou propriétaires. Les services actuellement pris en compte par le protocole ALTO en cours de spécification sont « Map service », « Map Filtering Service », « Endpoint Property Service », « Endpoint Cost Service ».

En outre, la requête peut contenir un ensemble de caractéristiques. Ces caractéristiques peuvent être fournies par le client applicatif C, car leur choix dépend de l'application, mais il peut être envisagé que le client ALTO ou un module fonctionnel tiers puisse déterminer ou contribuer à la détermination de ces caractéristiques en fonction d'autres données.

Selon un mode de réalisation de l'invention, le client C transmet la requête au client ALTO par l'intermédiaire d'un dispositif de médiation M.

Le client applicatif C transmet au client ALTO C_{ALTO} les identifiants d'un ensemble de nœuds.

Le client applicatif C transmet également une requête au dispositif de médiation M.

Cette requête contient :
- Un nombre de nœuds, dont le client C souhaite avoir l'ordonnancement et/ou le coût.
- Une pluralité de caractéristiques,
- et éventuellement des poids associés à ces caractéristiques.

Il est également possible de mettre dans la requête plusieurs groupes comprenant des associations entre caractéristiques, poids et nombres de nœuds souhaités.

A réception, le dispositif de médiation M transmet une deuxième requête au client ALTO C_{ALTO}.

Cette deuxième requête contient la pluralité de caractéristiques.

Le client ALTO transmet alors une requête conforme aux spécifications ALTO au serveur ALTO qui comprend
- un paramètre qui indique qu'il souhaite en réponse un vecteur sur un ensemble de caractéristiques,
- la pluralité de caractéristiques, et
- les identifiants de l'ensemble de noeuds.

Il peut devoir également comprendre un paramètre précisant que les valeurs de paramètres renvoyées soient des valeurs scalaires et non ordinales.

Le serveur ALTO utilise la vue topologique dont il dispose pour déterminer des informations concernant la pluralité de caractéristiques reçus sur l'ensemble de noeuds dont il a reçu des informations. Il renvoie au client ALTO C_{ALTO} un vecteur contenant ces informations. Sa réponse peut avoir schématiquement pour forme:
N1, V1C1, V1C2, V1C3, V1C4;
N2, V2C1, V2C2, V2C3, V2C4;
N5, V5C1, V5C2, V5C3, V5C4;
dans laquelle Ni indique l'identifiant du nœud x et ViCj représente la valeur pour le nœud i de la caractéristique j.

Ces caractéristiques Cj résultent de la topologie du réseau Np au sein de l'architecture de communication A. Elles comprennent des caractéristiques sur les connexions entre équipements (nombre de sauts IP, coût de chaque saut IP en valeur générique ou en kilomètres aériens, par exemple) et des caractéristiques sur les nœuds applicatifs eux-mêmes (identité attribuée par le service ALTO, type de connectivité, ressources disponibles en mémoire ou temps CPU...).

Le coût de chaque saut IP peut prendre en compte différents critères qui peuvent faire partie de la vue topologique que possède le serveur ALTO S : bande-passante, délai de transmission, gigue, engorgement d'un équipement IP...

Ces données peuvent être mesurées périodiquement et mises à jour au sein du serveur ALTO S ; elles peuvent être fournis par des outils de gestion de réseaux. Des options de données compatibles avec la RFC 5693 pourraient être :
- des statistiques sur les métriques fortement dynamiques d'état du réseau,
- un indicateur par exemple scalaire, pour chaque métrique, de qualité du nœud selon cette métrique,
- éventuellement un indicateur de fiabilité pour chaque information (statistique ou indications)
- la plage temporelle, par exemple horaire applicable pour ces valeurs,
- éventuellement pour chaque métrique, un ensemble comportant des plages temporelles données et les valeurs des statistiques ou indicateurs cités ci-dessous.

Les processus sont toutefois hors du cadre de l'invention proprement dite et ne seront pas davantage décrits.

La réponse du serveur ALTO S peut être renvoyée au client ALTO C_{ALTO} selon le protocole ALTO en cours de spécification. Cette réponse est retransmise au dispositif de médiation M.

Celui-ci peut mettre en oeuvre différentes techniques d'optimisation pour rechercher les meilleurs vecteurs de caractéristiques en fonction des poids fournis par le client applicatif C.

Il peut en effet être très intéressant de chercher à optimiser un vecteur de caractéristiques plutôt que chacune des caractéristiques prises séparément. Les solutions trouvées sont en effet plus stables et davantage porteuses de sens d'un point de vue physique. On peut obtenir un point optimum de Pareto, c'est-à-dire un vecteur dont au moins une composante n'est pas surpassée par cette composante chez tous les autres vecteurs.

Le dispositif de médiation M peut effectuer un ordonnancement des noeuds en fonction de ces informations renvoyées par le serveur ALTO S. Cet ordonnancement peut se baser sur une distance entre les vecteurs associés à chaque nœud de l'ensemble et un vecteur idéal.

Ce vecteur idéal peut être celui dont chaque composante est la meilleure valeur observée parmi les solutions efficaces (ou Pareto-optimales) extraites.

Le dispositif de médiation M peut alors retourner ces résultats au client applicatif. Si le client applicatif a transmis dans sa requête initiale un nombre de noeuds auquel il souhaite être connecté, seul ce nombre de noeuds sera retourné.

La réponse peut consister en une liste d'identifiant des noeuds ainsi déterminés, éventuellement associé avec une valeur. Cette valeur peut être le vecteur de caractéristiques associé tel que communiqué par le serveur ALTO S, ou bien une valeur plus synthétique qui peut être un ordinal représentatif de la distance entre ce vecteur et un vecteur idéal.

Le choix d'un type de valeur peut être déterminé par un paramètre transmis dans la requête du client applicatif C au dispositif de médiation M.

Le client applicatif peut établir la communication avec les noeuds choisis de façon connue en soi. Mais ces nœuds ont été choisis de façon optimale selon les caractéristiques déterminées par l'application. En outre, pour arriver à ces fins, le trafic supplémentaire n'a pas été augmenté puisque une seule requête vers le serveur ALTO a été envoyé et le trafic supplémentaire entre client applicatif, client ALTO et dispositif de médiation est très limité et peut être local à l'intérieur même du terminal de communication et dans sans coût pour l'architecture de communication A.

## Revendications

1. Système d'accès à une application répartie sur un réseau de nœuds (N1, N2, N3... N50) déployé sur une architecture de communication (A) par un client applicatif (C) connecté à ladite architecture de communication (A), chaque nœud présentant une pluralité de caractéristiques et un identifiant, le système d'accès comportant un client du service ALTO, Application-Layer Traffic Optimization, (C_{ALTO}) adaptée pour assurer l'interface entre le client applicatif (C) et un serveur ALTO (S) faisant partie dudit système d'accès, e client (C_{ALTO}) étant configuré pour recevoir au moins une requête comportant les identifiants d'un ensemble de nœuds déterminés par le client applicatif (C) et un ensemble de caractéristiques et pour transmettre une requête comprenant un paramètre indiquant qu'il souhaite en réponse un vecteur sur un ensemble de caractéristiques, l'ensemble de caractéristiques et les identifiants de l'ensemble de nœuds au serveur (S), le serveur (S) disposant d'une vue topologique dudit réseau au sein de ladite architecture de communication (A) et des moyens pour fournir en réponse à la requête dudit client (C_{ALTO}) des informations concernant l'ensemble de caractéristiques sur l'ensemble de nœuds en fonction de ladite vue topologique.

2. Système d'accès selon la revendication précédente comportant en outre un dispositif de médiation (M) adapté pour déterminer un ordonnancement de nœuds dudit ensemble de nœuds en fonction desdites informations.

3. Système d'accès selon la revendication précédente, dans lequel ledit dispositif de médiation (M) est adapté pour déterminer ledit ordonnancement en fonction de poids associés auxdites caractéristiques.

4. Système d'accès selon la revendication précédente dans lequel lesdits poids sont fournis par ledit client applicatif (C).

5. Système d'accès selon l'une des revendications précédente adapté pour être mis en œuvre sur un terminal de communication T mettant également en œuvre ledit client applicatif (C).

6. Système d'accès selon l'une des revendications précédentes, dans lequel lesdites informations sont sous la forme d'un vecteur de valeurs scalaires.

7. Système d'accès selon la revendication précédente, dans lequel ledit ordonnancement est effectuée en fonction d'une distance à un vecteur idéal.

8. Procédé d'accès à une application répartie sur un réseau de nœuds (N1, N2, N3... N50) déployé sur une architecture de communication (A) par un client applicatif (C) connecté à ladite architecture de communication (A), chaque nœud présentant une pluralité de caractéristiques et un identifiant, comportant la réception par un client du service ALTO, Application-Layer Traffic Optimization, (C_{ALTO}) adaptée pour assurer l'interface entre le client applicatif (C) et un serveur ALTO (S) d'au moins une requête comportant les identifiants d'un ensemble de nœuds déterminés par le client applicatif (C) et un ensemble de caractéristiques, la transmission par le client (CALTO) à un serveur (S) d'une requête comprenant un paramètre indiquant qu'il souhaite en réponse un vecteur sur un ensemble de caractéristiques, l'ensemble de caractéristiques et les identifiants de l'ensemble de nœuds et en réponse à la requête du client (C_{ALTO}), la transmission par le serveur (S) disposant d'une vue topologique dudit réseau au sein de ladite architecture de communication (A) vers ledit client applicatif (C), d'informations concernant l'ensemble de caractéristiques sur l'ensemble de nœuds en fonction de ladite vue topologique.

9. Programme d'ordinateur comportant les moyens pour l'exécution des étapes du procédé selon la revendication précédente lorsque ledit programme est exécuté sur un dispositif de traitement de données.

10. Système d'accès selon l'une des revendications 1 à 7, dans lequel lesdites informations, concernant une pluralité de caractéristiques relatives audit ensemble de nœuds, comportent une plage temporelle.

11. Système d'accès selon l'une des revendications 1 à 7, dans lequel lesdites informations, concernant une pluralité de caractéristiques relatives audit ensemble de nœuds, comportent, pour une métrique, un ensemble comportant des plages temporelles et des valeurs.

## Patentansprüche

1. Zugangssystem zu einer Anwendung, die über ein Knotennetz (N1, N2, N3, ... N50) verteilt ist, das auf einer Kommunikationsarchitektur (A) durch einen Anwendungs-Client (C) implementiert ist, der an die genannte Kommunikationsarchitektur (A) angeschlossen ist, wobei jeder Knoten eine Vielzahl von Merkmalen und eine Kennung aufweist, wobei das Zugangssystem einen Client des Dienstes ALTO, Application-Layer Traffic Optimization, (C_{ALTO}), umfasst, der geeignet ist, um die Schnittstelle zwischen dem Anwendungs-Client (C) und einem Server ALTO (S) zu gewährleisten, der Teil des Zugangssystems ist, wobei der Client (C_{ALTO}) ausgestaltet ist, um wenigstens eine Anfrage zu empfangen, die die Kennungen einer Gruppe von Knoten, die vom Anwendungs-Client (C) bestimmt sind, und eine Gruppe von Merkmalen umfasst, und um eine Anfrage zu übertragen, die einen Parameter umfasst, der angibt, dass er als Antwort einen Vektor auf einer Gruppe von Merkmalen, die Gruppe von Merkmalen und die Kennungen der Gruppe von Knoten am Server (S) wünscht, wobei der Server (S) über eine topologische Sicht des genannten Netzes innerhalb der genannten Kommunikationsarchitektur (A) und über Mittel verfügt, um als Antwort auf die Anfrage des genannten Clients (C_{ALTO}) Informationen bezüglich der Gruppe von Merkmalen auf die Gruppe von Knoten in Abhängigkeit von der genannten topologischen Ansicht zu liefern.

2. Zugangssystem gemäß dem voranstehenden Anspruch, umfassend darüber hinaus eine Vermittlungsvorrichtung (M), die geeignet ist, um eine Ablaufplanung von Knoten der genannten Gruppe von Knoten in Abhängigkeit von den genannten Informationen zu bestimmen.

3. Zugangssystem gemäß dem voranstehenden Anspruch, bei dem die genannte Vermittlungsvorrichtung (M) geeignet ist, um die genannte Ablaufplanung in Abhängigkeit von den genannten Merkmalen zugeordneten Gewichten zu bestimmen.

4. Zugangssystem gemäß dem voranstehenden Anspruch, bei dem die genannten Gewichte durch den genannten Anwendungs-Client (C) geliefert sind.

5. Zugangssystem gemäß einem der voranstehenden Ansprüche, das geeignet ist, um auf einem Kommunikationsterminal T umgesetzt zu sein, das ebenfalls den genannten Anwendungs-Client (C) umsetzt.

6. Zugangssystem gemäß einem der voranstehenden Ansprüche, bei dem die genannten Informationen die Form eines Vektors mit skalaren Werten aufweisen.

7. Zugangssystem gemäß dem voranstehenden Anspruch, bei dem die genannte Ablaufplanung in Abhängigkeit von einer Entfernung zu einem idealen Vektor ausgeführt ist.

8. Zugangsverfahren zu einer Anwendung, die über ein Knotennetz (N1, N2, N3, ... N50) verteilt ist, das auf einer Kommunikationsarchitektur (A) durch einen Anwendungs-Client (C) implementiert ist, das an die genannte Kommunikationsarchitektur (A) angeschlossen ist, wobei jeder Knoten eine Vielzahl von Merkmalen und eine Kennung aufweist, umfassend den Empfang durch einen Client des Dienstes ALTO, Application-Layer Traffic Optimization, (C_{ALTO}), der geeignet ist, um die Schnittstelle zwischen dem Anwendungs-Client (C) und einem Server ALTO (S) wenigstens einer Anfrage zu gewährleisten, die die Kennungen einer Gruppe von Knoten, die von dem Anwendungs-Client (C) bestimmt sind, und eine Gruppe von Merkmalen umfasst, die Übertragung einer Anfrage durch den Client (C_{ALTO}) auf einen Server (A), die einen Parameter umfasst, der angibt, dass er als Antwort einen Vektor über eine Gruppe von Merkmalen, die Gruppe von Merkmalen und die Kennungen der Gruppe von Knoten wünscht und die Übertragung durch den Server (S), der über eine topologische Sicht des genannten Netzes innerhalb der genannten Kommunikationsarchitektur (A) zu dem genannten Anwendungs-Client (C), von Informationen bezüglich die Gruppe von Merkmalen über die Gruppe von Knoten in Abhängigkeit von der genannten topologischen Sicht verfügt.

9. Computerprogramm, umfassend die Mittel für die Ausführung der Schritte des Verfahrens gemäß dem voranstehenden Anspruch, wenn das genannte Programm auf einer Datenverarbeitungsvorrichtung ausgeführt ist.

10. Zugangssystem gemäß einem der Ansprüche 1 bis 7, bei dem die genannten Informationen hinsichtlich einer Vielzahl von Merkmalen in Bezug auf die genannte Gruppe von Knoten einen zeitlichen Bereich umfassen.

11. Zugangssystem gemäß einem der Ansprüche 1 bis 7, bei dem die genannten Informationen hinsichtlich einer Vielzahl von Merkmalen in Bezug auf die genannte Gruppe von Knoten bei einer Metrik eine Gruppe umfassen, die zeitliche Bereiche und Werte umfasst.

## Claims

1. System providing access to an application distributed over a network of nodes (N1 N2, N3 ... N50) deployed on a communication architecture (A) by an application client (C) connected to said communication architecture (A), each node having a plurality of characteristics and an identifier, the system providing access comprising a client of the service ALTO, Application-Layer Traffic Optimization, (C_{ALTO}) adapted to provide the interface between the application client (C) and a server ALTO (S) part of said system providing access, the client (CALTO) being configured to receive at least one query comprising the identifiers of a set of nodes determined by the application client (C) and a set of characteristics and to transmit a query comprising a parameter indicating that it wishes as a response a vector on a set of characteristics, the set of characteristics and the identifiers of the set of nodes to the server (S), the server (S) having a topological view of said network within said communication architecture (A) and means for providing as a response to the query of said client (CALTO) information concerning the set of characteristics on the set of nodes as a function of said topological view.

2. System providing access according to the preceding claim further comprising a mediating device (M) adapted to determine a sequencing of nodes of said set of nodes as a function of said information.

3. System providing access according to the preceding claim, wherein said mediating device (M) is adapted to determine said sequencing as a function of the weight associated with said characteristics.

4. System providing access according to the preceding claim wherein said weights are provided by said application client (C).

5. System providing access according to one of the preceding claims adapted to be implemented on a communication terminal T also implementing said application client (C).

6. System providing access according to one of the preceding claims, wherein said information is in the form of a vector of scalar values.

7. System providing access according to the preceding claim, wherein said sequencing is carried out as a function of a distance to an ideal vector.

8. Method providing access to an application distributed over a network of nodes (N1, N2, N3 ... N50) deployed on a communication architecture (A) by an application client (C) connected to said communication architecture (A), each node having a plurality of characteristics and an identifier, including the reception by a client of the service ALTO, Application-Layer Traffic Optimization, (C_{ALTO}) adapted to provide the interface between the application client (C) and a server ALTO (S) of at least one query comprising the identifiers of a set of nodes determined by the application client (C) and a set of characteristics, the transmission by the client (C_{ALTO}) to a server (S) of a query comprising a parameter indicating that it wishes as a response a vector on a set of characteristics, the set of characteristics and the identifiers of the set of nodes and in response to the query of the client (C_{ALTO}), the transmission by the server (S) having a topological view of said network within said communication architecture (A) to said application client (C), of information concerning the set of characteristics on the set of nodes as a function of said topological view.

9. Computer program comprising the means for executing steps of the method according to the preceding claim when said programme is executed on a data processing system.

10. System providing access according to one of claims 1 to 7, wherein said information, concerning a plurality of characteristics relative to said set of nodes, comprises a time range.

11. System providing access according to one of claims 1 to 7, wherein said information, concerning a plurality of characteristics relative to said set of nodes, comprises, for a metric, a set comprising time ranges and values.
